# EUROPEAN PATENT APPLICATION

(11) **EP 4 109 597 A1**
(43) Date of publication of application: **28.12.2022**
(21) Application number: 21837229.0
(22) Date of filing: 06.02.2021
(51) Int. Cl.: H01M 4/36, H01M 4/38, H01M 4/62, H01M 10/0525, B82Y 30/00, B82Y 40/00

(54) **SILICON-CARBON NEGATIVE ELECTRODE MATERIAL FOR LITHIUM ION BATTERY AND PREPARATION METHOD THEREFOR**

(30) Priority: 06.07.2020 CN 202010639966
(71) Applicant: Anhui Keda Purui Energy Tech Co., Ltd., Maanshan, Anhui 243100 (CN); Anhui Keda Borui Energy Tech Co., Ltd., Maanshan, Anhui 243100 (CN); Keda (Anhui) New Material Co., Ltd., Maanshan, Anhui 243100 (CN)
(72) Inventor: ZHANG, Xiaolong, Maanshan, Anhui 243100 (CN); HU, Liang, Maanshan, Anhui 243100 (CN); ZHANG, Shaobo, Maanshan, Anhui 243100 (CN); WANG, Hao, Maanshan, Anhui 243100 (CN)
(74) Representative: Sommer, Andrea
(86) International application number: PCT/CN2021/075668
(87) International publication number: WO 2022/007401

(57) **Abstract**

The present invention relates to the field of lithium ion battery technologies, and in particular, to a silicon-carbon negative electrode material for a lithium ion battery and a preparation method therefor. The negative electrode material includes nano-silicon and a gas-phase carbon source, where the nano-silicon is dispersed in the entire composite material, a part of a surface of the nano-silicon is covered by a vapor-deposited carbon source, and the nano-silicon has a median particle diameter D50 of 100 nm or below; a grain size of the nano-silicon is 10 nm or below; the vapor-deposited carbon source has an average thickness of 10-200 nm; the nano-silicon includes oxygen, the mass content of the oxygen element is 5%-30%, and the negative electrode material includes 60%-90% of nano-silicon by weight and 10%-40% of gas-phase carbon source by weight. Compared with the prior art, the silicon-carbon negative electrode material for a lithium ion battery, which is prepared according to the present invention, has excellent electrochemical performance.

## Description

### TECHNICAL FIELD

The present invention relates to the field of lithium ion battery technologies, and in particular, to a silicon-carbon negative electrode material for a lithium ion battery and a preparation method therefor.

### BACKGROUND

At present, conventional lithium ion negative electrode materials are mainly a graphite negative electrode, but a theoretical specific capacity of the graphite negative electrode is only 372 mAh/g, which can no longer meet urgent requirements of users. A theoretical capacity of silicon is as high as 4200 mAh/g, which is 10 times or more than that of the graphite negative electrode material. In addition, coulombic efficiency of silicon-carbon composite products is also close to that of the graphite negative electrode, the silicon-carbon composite products are low in cost and environmentally friendly, and there are rich reserves on the earth. Therefore, the silicon-carbon composite products are of the best choice for a new generation of high-capacity negative electrode materials. However, because the silicon material has poor conductivity, and the volume of silicon during charging expands by as high as 300%, the volume expansion during a charging and discharging process easily leads to collapse of the material structure and peeling and pulverization of electrodes, resulting in a loss of an active material. Thus, the battery capacity is decreased sharply, seriously deteriorating cycle performance.

To stabilize the structure of silicon in the charging and discharging process, alleviate the expansion, and achieve the effect of improving electrochemical performance, a carbon material with high conductivity and a high specific surface area is urgently needed, and is mixed with silicon to be used as a negative electrode material for lithium batteries.

### SUMMARY

To resolve the problems existing in the foregoing silicon-carbon negative electrode material, the present invention provides a silicon-carbon negative electrode material for a lithium ion battery and a preparation method therefor. The negative electrode material according to the present invention includes nano-silicon and a gas-phase carbon source, where the nano-silicon is prepared by wet grinding, and can greatly improve a specific capacity of the negative electrode material. In addition, the nano-silicon prepared by using this method has a relatively small particle size and grain size and good dynamics and can be massively produced, and controllable performance is achieved. Because gaps between nano-silicon particles are relatively small, the vapor-deposited carbon source can achieve a good coating effect, serves as a protective shell, and improves electronic conductivity.

Specifically, the present invention relates to a silicon-carbon negative electrode material for a lithium ion battery, including nano-silicon and a gas-phase carbon source, where the nano-silicon is dispersed in the entire composite material, a part of a surface of the nano-silicon is covered by a vapor-deposited carbon source, the nano-silicon is detected by using a Mastersizer 3000 particle size analyzer, and a median particle diameter D50 is 100 nm or below; the nano-silicon is analyzed by using an X-ray diffraction pattern, and according to a half-peak width of a diffraction peak near 2θ = 28.4° which pertains to Si(111), a grain size of the nano-silicon is calculated by using a Scherrer formula to be 10 nm or below; the entire composite material is scanned by a TEM, and an average thickness of the vapor-deposited carbon source is measured to be 10-200 nm.

Preferably, the nano-silicon includes oxygen, and the mass content of the oxygen element is 5%-30%, preferably 10%-20%.

Preferably, the negative electrode material comprises 60%-90% of nano-silicon by weight and 10%-40% of gas-phase carbon source by weight.

Preferably, the negative electrode material has a specific surface area of 1-20 m²/g, preferably 2-10 m²/g; the negative electrode material has a median particle diameter D50 of 1-30 µm, preferably 3-20 µm; the moisture content of the negative electrode material is 0.01-1wt%, preferably 0.05-0.5wt%; and the negative electrode material has a tap density of 0.3-1.4 g/cm³, preferably 0.5-1.0 g/cm³.

The present invention further relates to a method for preparing any one of the silicon-carbon negative electrode material for a lithium ion battery, where comprising the following steps:
(1) preparation of nano-silicon slurry: adding a silicon powder raw material and a grinding aid into an organic solvent, uniformly mixing, and then introducing the mixture into a grinding device for grinding for 30-60 h to obtain the nano-silicon slurry;
(2) atomization and drying: atomizing and drying the nano-silicon slurry in step (1) by a spray dryer to obtain dry nano-silicon powder;
(3) mechanical shaping: mechanically shaping the dry nano-silicon powder in step (2) to obtain nano-silicon particles with concentrated particle size distribution and regular morphology; and
(4) covering by a gas-phase carbon source: placing the nano-silicon particles in step (3) in a vapor deposition furnace, introducing a protective gas, then introducing a carbon source gas, and heating to deposit the gas-phase carbon source to cover the nano-silicon particles, so as to obtain the silicon-carbon negative electrode material.

Preferably, the silicon powder raw material in step (1) is polysilicon, and the silicon powder raw material has purity greater than 99.9% and a median particle diameter of 1-100 µm, preferably 3-20 µm;
the grinding aid is one or more selected from the group consisting of aluminum chloride, polymeric alkylol amine, triethanolamine, triisopropanolamine, sodium pyrophosphate, sodium tripolyphosphate, sodium acrylate, sodium octadecanoate, sodium polyacrylate, sodium methylene bis-naphthalene sulfonate, potassium citrate, lead naphthenate, tris(2-ethylhexyl) phosphate, sodium dodecyl sulfate, methyl amyl alcohol, cellulose derivatives or guar gum;
the organic solvent is one or more selected from the group consisting of methanol, toluene, benzyl alcohol, ethanol, ethylene glycol, chlorinated ethanol, propanol, isopropanol, propylene glycol, butanol, n-butanol, isobutanol, pentanol, neopentyl alcohol, octanol, acetone or cyclohexanone;
a mass ratio of the silicon powder raw material to a dispersant is 100:(1-20), preferably 100:(5-15); and after the solvent is added, the solid content of a mixed solution is 10%-40%, preferably 20%-30%;
the wet grinding device is a sand mill, a stirring shaft of the sand mill is one of a disc type, a rod type or a rod disc type in structural shape, and the sand mill has a maximum linear speed greater than 14 m/s; and
a material of ball mill beads is selected from the group consisting of ceramics, zirconia, alumina or cemented carbide, and a mass ratio of the ball mill beads to micron silicon powder is (10-30): 1.

Preferably, the spray dryer in step (2) is a closed spray dryer, with a hot air inlet temperature of 150-300°C, preferably 160-280°C, and an outlet temperature of 80-140°C, preferably 90-130°C; and
an atomizing disc in the spray dryer has a rotating speed greater than 10000 rpm.

Preferably, the mechanical shaping in step (3) comprises pulverizing, grading, and sieving, comprising the following specific process steps:
treating the dry nano-silicon powder obtained in step (2) by a pulverizer, adjusting strength of a main machine to 30-50 Hz, adjusting grading strength to 30-50 Hz, so that the particle size of the dry nano-silicon powder is reduced, removing fine powder by grading, and sieving the powder to remove large particles, wherein a sieve has 100-400 meshes, so that the dry nano-silicon powder with concentrated particle size distribution and regular morphology is obtained.

Preferably, in step (4), the deposition process of the gas-phase carbon source has a heating rate of 1-3°C/min and a carbon deposition temperature of 600-900°C, the organic carbon source gas has a flow rate of 1-5 L/min, and reaction duration is 1-4 h;
the organic carbon source gas is one or a combination of two or more selected from the group consisting of methane, ethane, ethylene, acetylene, propane, propylene, acetone, butane, butene, pentane, hexane, benzene, toluene, xylene, styrene, naphthalene, phenol, furan, pyridine, anthracene, and liquefied gas; and
the protective gas is one selected from the group consisting of nitrogen, helium, neon, and argon.

The present invention further relates to a lithium ion battery, where a negative electrode material of the lithium ion battery is any one of the silicon-carbon negative electrode materials for a lithium ion battery.

Compared with the prior art, the present invention has the following advantages:
(1) In the silicon-carbon negative electrode material prepared in the present invention, the prepared nano-silicon is ground by using a wet method, the obtained nano-silicon has a median particle diameter D50 of 100 nm or below, and the grain size of the nano-silicon is 10 nm or below, so that absolute volume expansion of silicon is reduced, and the dynamics of the nano-silicon in the negative electrode material is improved.
(2) In the silicon-carbon negative electrode material prepared in the present invention, nano-silicon slurry is treated by using atomization and drying and mechanical shaping processes. An atomization device recycles the organic solvent in the nano-silicon slurry, to achieve effects of environmental protection and cost reduction. In addition, parameters of the atomization device and mechanical shaping parameters are adjusted to obtain nano-silicon particles with concentrated particle size distribution and regular morphology.
(3) In the silicon-carbon negative electrode material prepared in the present invention, the carbon source is deposited on the nano-silicon particles by using a vapor deposition method to form a carbon coating layer, and a vapor-deposited carbon source is measured to have a thickness of 10-200 nm. This can improve conductivity of the negative electrode material, reduce internal resistance, and avoid the erosion by an electrolyte, thereby greatly improving cycle performance of the negative electrode material.
(4) The silicon-carbon negative electrode material prepared in the present invention has excellent electrochemical performance, high first reversible capacity (> 2200 mAh/g), and high first coulombic efficiency (> 86%).

### BRIEF DESCRIPTION OF DRAWINGS

The present invention is further described below with reference to accompanying drawings.

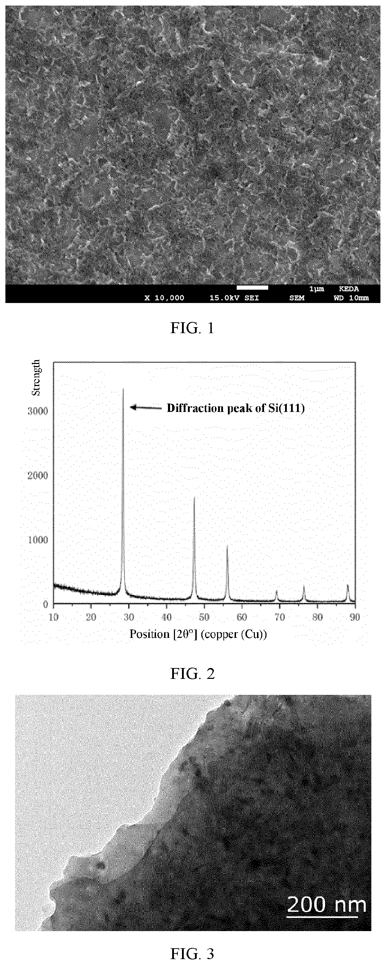

FIG. 1 is an SEM image of nano-silicon prepared in Embodiment 1 of the present invention;
FIG. 2 is an XRD pattern of the nano-silicon prepared in Embodiment 1 of the present invention;
FIG. 3 is a TEM image of silicon-carbon negative electrode material particles prepared in Embodiment 1 of the present invention;

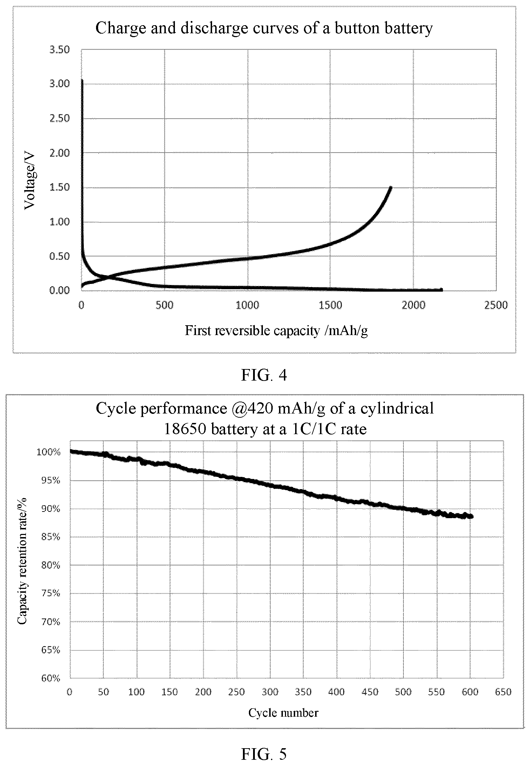

FIG. 4 is first charge and discharge curves of a button battery prepared in Embodiment 1 of the present invention; and
FIG. 5 is a cyclic curve of a cylindrical 18650 battery prepared in Embodiment 1 of the present invention at a 1C/1C rate.

### DESCRIPTION OF EMBODIMENTS

To facilitate the understanding of the present invention, the following embodiments are provided in the present invention. It should be understood by a person skilled in the art that the embodiments are only intended to help understand the present invention, and should not be regarded as a specific limitation to the present invention.

### Embodiment 1

A method for preparing a silicon-carbon negative electrode material for a lithium ion battery includes the following steps.
(1) Preparation of nano-silicon slurry: 1000 g of polysilicon powder with a median particle diameter of 3 µm and 10 g of polyvinylpyrrolidone were added into methanol based on a mass ratio of the silicon powder to the polyvinylpyrrolidone being 100:1, where the solid content of the mixed solution was 20%; mixed slurry was introduced into a sand mill, where a mass ratio of grinding bead zirconia balls to the silicon powder was 10:1, and the grinding was performed for 50 h, so as to obtain the required nano-silicon slurry. The nano-silicon slurry was detected by using a Mastersizer 3000 particle size analyzer, and the nano-silicon had a median particle diameter of 72 nm.
(2) Atomization and drying: The nano-silicon slurry in step (1) was atomized and dried by a closed spray dryer with a hot air inlet temperature of 190°C and an outlet temperature of 110°C, to obtain dry nano-silicon powder.
(3) Mechanical shaping: The dry nano-silicon powder obtained in step (2) was treated by a pulverizer, strength of a main machine was adjusted to 50 Hz, grading strength was adjusted to 50 Hz, so that the particle size of the dry nano-silicon powder was reduced, fine powder was removed by grading, and the powder was sieved to remove large particles, where a sieve had 400 meshes, so that the dry nano-silicon powder with concentrated particle size distribution and regular morphology was obtained. The dry nano-silicon powder was analyzed by using an X-ray diffraction pattern, and according to a half-peak width of a diffraction peak near 2θ = 28.4° which pertains to Si(111), a grain size of the nano-silicon was calculated by using a Scherrer formula to be 6.9 nm; and the mass content of oxygen elements in the dry nano-silicon powder was detected by using an oxygen/nitrogen/hydrogen analyzer to be 17%.
(4) Covering by a gas-phase carbon source: The dry nano-silicon powder with regular morphology in step (3) was placed in a vapor deposition furnace, nitrogen was introduced to remove air until the oxygen content was less than 100 ppm, then the temperature was raised to 900°C at a heating rate of 3°C/min, and then methane was introduced for vapor deposition, where a flow rate was 1 L/min, and a reaction time was controlled to be 1 h, so as to form a uniform carbon coating layer with a mass proportion of 10wt%, to obtain the silicon-carbon negative electrode material. The silicon-carbon negative electrode material was scanned by a TEM, and a thickness of the vapor-deposited carbon source was measured to be 10-30 nm.

### Embodiment 2

(1) Preparation of nano-silicon slurry: 1000 g of polysilicon powder with a median particle diameter of 8 µm and 50 g of sodium dodecyl sulfate were added into propanol based on a mass ratio of the silicon powder to the sodium dodecyl sulfate being 100:5, where the solid content of the mixed solution was 20%; mixed slurry was introduced into a sand mill, where a mass ratio of grinding bead cemented carbide balls to the silicon powder was 10:1, and the grinding was performed for 60 h, so as to obtain the required nano-silicon slurry. The nano-silicon slurry was detected by using a Mastersizer 3000 particle size analyzer, and the nano-silicon had a median particle diameter of 78 nm.
(2) Atomization and drying: The nano-silicon slurry in step (1) was atomized and dried by a closed spray dryer with a hot air inlet temperature of 280°C and an outlet temperature of 130°C, to obtain dry nano-silicon powder.
(3) Mechanical shaping: The dry nano-silicon powder obtained in step (2) was treated by a pulverizer, strength of a main machine was adjusted to 40 Hz, grading strength was adjusted to 40 Hz, so that the particle size of the dry nano-silicon powder was reduced, fine powder was removed by grading, and the powder was sieved to remove large particles, where a sieve had 300 meshes, so that the dry nano-silicon powder with concentrated particle size distribution and regular morphology was obtained. The dry nano-silicon powder was analyzed by using an X-ray diffraction pattern, and based on a half-peak width of a diffraction peak near 2θ = 28.4° which pertains to Si(111), a grain size of the nano-silicon was calculated by using a Scherrer formula to be 7.4 nm; and the mass content of oxygen elements in the dry nano-silicon powder was detected by using an oxygen/nitrogen/hydrogen analyzer to be 26%.
(4) Covering by a gas-phase carbon source: The dry nano-silicon powder with regular morphology in step (3) was placed in a vapor deposition furnace, argon was introduced to remove air until the oxygen content was less than 100 ppm, then the temperature was raised to 800°C at a heating rate of 2°C/min, and then acetylene was introduced for vapor deposition, where a flow rate was 2 L/min, and a reaction time was controlled to be 2 h, so as to form a uniform carbon coating layer with a mass proportion of 20wt%, to obtain the silicon-carbon negative electrode material. The silicon-carbon negative electrode material was scanned by a TEM, and a thickness of the vapor-deposited carbon source was measured to be 50-80 nm.

### Embodiment 3

(1) Preparation of nano-silicon slurry: 1000 g of polysilicon powder with a median particle diameter of 15 µm and 100 g of guar gum were added into acetone based on a mass ratio of the silicon powder to the guar gum being 100:10, where the solid content of the mixed solution was 30%; mixed slurry was introduced into a sand mill, where a mass ratio of grinding bead stainless steel balls to the silicon powder was 10:1, and the grinding was performed for 40 h, so as to obtain the required nano-silicon slurry. The nano-silicon slurry was detected by using a Mastersizer 3000 particle size analyzer, and the nano-silicon had a median particle diameter of 85 nm.
(2) Atomization and drying: The nano-silicon slurry in step (1) was atomized and dried by a closed spray dryer with a hot air inlet temperature of 200°C and an outlet temperature of 100°C, to obtain dry nano-silicon powder.
(3) Mechanical shaping: The dry nano-silicon powder obtained in step (2) was treated by a pulverizer, strength of a main machine was adjusted to 35 Hz, grading strength was adjusted to 35 Hz, so that the particle size of the dry nano-silicon powder was reduced, fine powder was removed by grading, and the powder was sieved to remove large particles, where a sieve had 250 meshes, so that the dry nano-silicon powder with concentrated particle size distribution and regular morphology was obtained. The dry nano-silicon powder was analyzed by using an X-ray diffraction pattern, and based on a half-peak width of a diffraction peak near 2θ = 28.4° which pertains to Si(111), a grain size of the nano-silicon was calculated by using a Scherrer formula to be 8.3 nm; and the mass content of oxygen elements in the dry nano-silicon powder was detected by using an oxygen/nitrogen/hydrogen analyzer to be 13%.
(4) Covering by a gas-phase carbon source: The dry nano-silicon powder with regular morphology in step (3) was placed in a vapor deposition furnace, nitrogen was introduced to remove air until the oxygen content was less than 100 ppm, then the temperature was raised to 700°C at a heating rate of 3°C/min, and then methane was introduced for vapor deposition, where a flow rate was 3 L/min, and a reaction time was controlled to be 3 h, so as to form a uniform carbon coating layer with a mass proportion of 30wt%, to obtain the silicon-carbon negative electrode material. The silicon-carbon negative electrode material was scanned by a TEM, and a thickness of the vapor-deposited carbon source was measured to be 90-130 nm.

### Embodiment 4

(1) Preparation of nano-silicon slurry: 1000 g of polysilicon powder with a median particle diameter of 20 µm and 150 g of polyethylene glycol fatty acid were added into isopropanol based on a mass ratio of the silicon powder to the polyethylene glycol fatty acid being 100:15, where the solid content of the mixed solution was 30%; mixed slurry was introduced into a sand mill, where a mass ratio of grinding ceramic balls to the silicon powder was 10:1, and the grinding was performed for 30 h, so as to obtain the required nano-silicon slurry. The nano-silicon slurry was detected by using a Mastersizer 3000 particle size analyzer, and the nano-silicon had a median particle diameter of 97 nm.
(2) Atomization and drying: The nano-silicon slurry in step (1) was atomized and dried by a closed spray dryer with a hot air inlet temperature of 160°C and an outlet temperature of 90°C, to obtain dry nano-silicon powder.
(3) Mechanical shaping: The dry nano-silicon powder obtained in step (2) was treated by a pulverizer, strength of a main machine was adjusted to 30 Hz, grading strength was adjusted to 30 Hz, so that the particle size of the dry nano-silicon powder was reduced, fine powder was removed by grading, and the powder was sieved to remove large particles, where a sieve had 200 meshes, so that the dry nano-silicon powder with concentrated particle size distribution and regular morphology was obtained. The dry nano-silicon powder was analyzed by using an X-ray diffraction pattern, and based on a half-peak width of a diffraction peak near 2θ = 28.4° which pertains to Si(111), a grain size of the nano-silicon was calculated by using a Scherrer formula to be 9.7 nm; and the mass content of oxygen elements in the dry nano-silicon powder was detected by using an oxygen/nitrogen/hydrogen analyzer to be 8%.
(4) Covering by a gas-phase carbon source: The dry nano-silicon powder with regular morphology in step (3) was placed in a vapor deposition furnace, helium was introduced to remove air until the oxygen content was less than 100 ppm, then the temperature was raised to 600°C at a heating rate of 3°C/min, and then natural gas was introduced for vapor deposition, where a flow rate was 5 L/min, and a reaction time was controlled to be 4 h, so as to form a uniform carbon coating layer with a mass proportion of 40wt%, to obtain the silicon-carbon negative electrode material. The silicon-carbon negative electrode material was scanned by a TEM, and a thickness of the vapor-deposited carbon source was measured to be 150-200 nm.

### Comparative Example 1

This comparative example is the same as Embodiment 1 except in that step (1) was not performed, that is, the silicon powder raw material was not nano-sized. Details are not described herein again.

### Comparative Example 2

This comparative example is the same as Embodiment 1 except in that in step (1), by controlling the grinding time and ball-to-material ratio parameters, the particle diameter D50 of nano-silicon was adjusted to 172 nm, and a grain size of the nano-silicon was calculated by using a Scherrer formula to be 19.6 nm. Details are not described herein again.

### Comparative Example 3

This comparative example is the same as Embodiment 1 except in that in step (1), by controlling the grinding time and ball-to-material ratio parameters, the particle diameter D50 of nano-silicon was adjusted to 458 nm, and a grain size of the nano-silicon was calculated by using a Scherrer formula to be 52.7 nm. Details are not described herein again.

### Comparative Example 4

This comparative example is the same as Embodiment 1 except in that in step (2), nano-silicon slurry was not dried by atomization, but was dried by conventional heating. Details are not described herein again.

### Comparative Example 5

This comparative example is the same as Embodiment 1 except in that in step (3), dry nano-silicon powder was not mechanically shaped. Details are not described herein again.

### Comparative Example 6

This comparative example is the same as Embodiment 1 except in that in step (4), dry nano-silicon powder was not coated with carbon. Details are not described herein again.

### Comparative Example 7

This comparative example is the same as Embodiment 1 except in that in step (4), a carbon coating layer was not prepared by vapor deposition, but by solid-phase mixed coating. Details are not described herein again.

### Comparative Example 8

This comparative example is the same as Embodiment 1 except in that in step (1), the grinding time was prolonged to 90 h. Details are not described herein again.

The mass content of oxygen elements in the dry nano-silicon powder was detected by using an oxygen/nitrogen/hydrogen analyzer to be 39%.

### Comparative Example 9

This comparative example is the same as Embodiment 1 except in that in step (4), by increasing the flow rate and time of methane vapor deposition, the mass proportion of a coating layer was 50wt%. Details are not described herein again.

The following method was used to test the silicon-carbon negative electrode materials in Embodiments 1 to 4 and Comparative Examples 1 to 9:
A Malvern laser particle size analyzer Mastersizer 3000 was used to test the particle size range of the materials.

A field emission scanning electron microscope (SEM) (JSM-7160) was used to analyze the morphology and graphical processing of the materials.

An oxygen/nitrogen/hydrogen (ONH) analyzer was used to accurately and quickly measure the oxygen content in the materials.

An X'Pert3 Powder (XRD) was used to analyze the phase of the materials and determine the grain sizes of the materials.

A field emission transmission electron microscope (TEM) (JEM-F200) was used to analyze the morphology and a state of amorphous carbon of the materials.

The specific surface areas of the negative electrode materials were measured by using a US McBee meter and pore analyzer (TriStar II 3020).

A tap density analyzer (Quantachrome Autotap) was used to measure tap densities of the negative electrode materials.

The moisture content in the negative electrode materials was determined by using a Karl Fischer moisture titrator (coulometric method).

The silicon-carbon negative electrode materials obtained in Embodiments 1 to 4 and Comparative Examples 1 to 9 were mixed with conductive agent carbon black (Super P), carbon nanotubes and LA133 glue at a mass ratio of 91:2:2:5 in solvent pure water for homogenizing, and the solid content was controlled at 45%, the negative electrode materials were coated on copper foil current collector, and dried in vacuum to obtain a negative electrode plate. A button battery was assembled in a glove box in argon atmosphere, Celgard2400 was used as a separator, the electrolyte was 1 mol/L LiPF6/EC+DMC+EMC(v/v=1:1:1), and lithium metal sheets were used as a counter electrode. Charge and discharge testing was performed on the button battery, with a voltage range of 5 mV to 1.5 V and a current density of 80 mA/g. First reversible capacity and efficiency of the silicon-carbon negative electrode materials in the embodiments and the comparative examples were measured.

Based on the measured first reversible capacity in the button battery, the silicon-carbon negative electrode materials in the embodiments and the comparative examples were mixed with the same stable artificial graphite, and the first reversible capacity of the button battery of the mixed powder was tested to be 420±2 mAh/g. The mixed powder was prepared into a negative electrode plate based on a button battery technology, a ternary electrode plate, a separator and an electrode liquid prepared by a relatively mature technology remained unchanged, and a cylindrical 18650 battery cell was assembled. The cylindrical 18650 battery cell underwent charge and discharge testing. Devices for testing the button battery and the cylindrical 18650 battery cell with a voltage range of 2.5 mV to 4.2 V and a current density of 420 mA/g were a LAND battery test system from Wuhan Jinnuo Electronics Co., Ltd.

Performance test results of silicon-carbon negative electrode materials in Embodiments 1 to 4 and Comparative Examples 1 to 9:

**Table 1 Physical indexes and results of button battery testing of silicon-carbon negative electrode materials in Embodiments 1 to 4 and Comparative Examples 1 to 9:**

| **Embodiment/ comparative example** | | **Specific surface area m²/g** | **Median particle diameter D50/µm** | **Moisture wt%** | **Tap density g/cm³** | **First reversible capacity /mAh/g** | **First coulombic efficiency/%** | **Cylindrical 18650 battery &420 capacity 800-cycle retention rate/%** |
|---|---|---|---|---|---|---|---|---|
| **Embodiment** | **Embodiment 1** | 8.9 | 3.2 | 0.06 | 0.72 | 2236.9 | 86.6 | 87.2 |
| | **Embodiment 2** | 7.6 | 7.5 | 0.14 | 0.77 | 1872.5 | 87.5 | 85.6 |
| | **Embodiment 3** | 4.3 | 14.6 | 0.33 | 0.82 | 1329.4 | 85.6 | 82.1 |
| | **Embodiment 4** | 2.1 | 18.3 | 0.41 | 0.94 | 1132.7 | 82.1 | 80.8 |
| **Comparative Example** | **Comparative Example 1** | 4.2 | 13.7 | 0.36 | 0.87 | 1428.4 | 77.8 | 32.9 |
| | **Comparative Example 2** | 4.6 | 11.8 | 0.44 | 1.07 | 1573.9 | 83.5 | 68.2 |
| | **Comparative Example 3** | 5.2 | 12.2 | 0.47 | 0.92 | 1638.7 | 82.7 | 57.5 |
| | **Comparative Example 4** | 7.9 | 21.9 | 1.58 | 0.88 | 1419.3 | 75.9 | 73.1 |
| | **Comparative Example 5** | 2.4 | 32.4 | 0.27 | 0.79 | 1591.2 | 84.3 | 76.8 |
| | **Comparative Example 6** | 47.4 | 16.8 | 0.63 | 0.47 | 2459.6 | 57.1 | 21.9 |
| | **Comparative Example 7** | 7.3 | 3.9 | 0.16 | 0.72 | 2082.1 | 82.6 | 81.7 |
| | **Comparative Example 8** | 8.5 | 3.4 | 0.03 | 0.69 | 1772.8 | 79.3 | 81.4 |
| | **Comparative Example 9** | 13.6 | 6.3 | 0.07 | 0.71 | 957.1 | 83.2 | 86.9 |

It can be learned from Table 1 that the silicon-carbon negative electrode material prepared by using the method according to the present application includes nano-silicon and a gas-phase carbon source, where the nano-silicon is dispersed in the entire composite material, and at least a part of a surface of the nano-silicon is covered by a vapor-deposited carbon source. The grain size of the obtained nano-silicon can be adjusted by using a nano-silicon grinding process, and the grain size of the nano-silicon is calculated by using the Scherrer formula to be 10 nm or below. Carbon source coating layers with different thicknesses can be obtained by using a process of vapor deposition of the carbon source. The thickness of the vapor-deposited carbon source is measured to be 10-200 nm by scanning the entire composite material by a TEM. Physical parameter indexes of the silicon-carbon composite material, such as the specific surface area, the median particle diameter D50, the moisture, and the tap density, can be adjusted by atomization and drying and mechanical shaping. In Embodiments 1 to 4, as the median particle diameter of the nano-silicon, the silicon grain size, and the mass proportion of the vapor-deposited carbon source gradually increased and the atomization and drying and mechanical shaping parameters were adjusted, the specific surface area of the silicon-carbon negative electrode materials gradually reduced (8.9-2.1 m²/g), the median particle diameter D50 gradually increased (3.2-18.3 µm), the moisture content gradually increased (0.19-0.41 wt%), the tap density gradually increased (0.61-0.94 g/cm³), the first reversible capacity gradually decreased (2236.9-1032.7 mAh/g), the first coulombic efficiency gradually reduced (86.3-82.1%), and the cycle performance of the cylindrical battery gradually decreased (87.2-80.8%).

In Comparative Examples 1 to 3, when the silicon powder raw material of the silicon-carbon negative electrode material was not nano-sized, or the median particle diameter of the nano-silicon and the silicon grain size were far greater than those of Embodiment 1, the first reversible capacity, first coulombic efficiency and cycle performance of the obtained silicon-carbon negative electrode material were relatively poor, and were far inferior to those of the negative electrode material prepared in Embodiment 1. In Comparative Example 4, the nano-silicon slurry was dried by conventional heating instead of atomization, so that the obtained silicon-carbon negative electrode material had relatively poor first reversible capacity (1419.3 mAh/g) and first coulombic efficiency (75.9%), and the silicon-carbon negative electrode material had an excessively high median particle diameter D50 (21.9 µm) and moisture content (1.58wt%). In Comparative Example 5, the dry nano-silicon powder was not mechanically shaped, the obtained silicon-carbon negative electrode material had an obviously and excessively large median particle diameter D50 (32.4 µm), which also deteriorated the first reversible capacity, first coulombic efficiency performance, and cycle performance. In Comparative Example 6, the dry nano-silicon powder was not coated with carbon, and the obtained silicon-carbon negative electrode material had an excessively large specific surface area (47.4 m²/g); although the first reversible capacity was relatively high, the first coulombic efficiency performance was obviously and excessively low, and was only 57.1%, and the cycle performance deteriorated obviously, and was only 21.9%. In Comparative Example 7, the carbon coating layer was not prepared by vapor deposition, but by solid-phase mixed coating, the first coulombic efficiency of the obtained silicon-carbon negative electrode material was excessively low, and was 82.6%, and the cycle performance was also relatively poor, and was 81.7%. In Comparative Example 8, the grinding time was prolonged to 90 h, the mass content of oxygen elements in the dry nano-silicon powder was detected by the oxygen/nitrogen/hydrogen analyzer to be 39%, the first capacity and first efficiency of the obtained silicon-carbon negative electrode material deteriorated obviously, and the cycle performance of the battery was affected. In Comparative Example 9, by increasing the flow rate and time of methane vapor deposition, the mass proportion of the coating layer was 50wt%, the first reversible capacity of the obtained silicon-carbon negative electrode material was only 957.1 mAh/g, far lower than that of Embodiment 1, and the cycle performance was also poor.

## Claims

1. A silicon-carbon negative electrode material for a lithium ion battery, comprising nano-silicon and a gas-phase carbon source, wherein the nano-silicon is dispersed in the entire composite material, a part of a surface of the nano-silicon is covered by a vapor-deposited carbon source, the nano-silicon is detected by using a Mastersizer 3000 particle size analyzer, and a median particle diameter D50 is 100 nm or below; the nano-silicon is analyzed by using an X-ray diffraction pattern, and according to a half-peak width of a diffraction peak near 2θ = 28.4° which pertains to Si(111), the grain size of the nano-silicon is calculated by using a Scherrer formula to be 10 nm or below; the entire composite material is scanned by a TEM, and an average thickness of the vapor-deposited carbon source is measured to be 10-200 nm.

2. The silicon-carbon negative electrode material for a lithium ion battery according to claim 1, wherein the nano-silicon comprises oxygen, and the mass content of the oxygen element is 5%-30%, preferably 10%-20%.

3. The silicon-carbon negative electrode material for a lithium ion battery according to claim 1, wherein the negative electrode material comprises 60%-90% of nano-silicon by weight and 10%-40% of gas-phase carbon source by weight.

4. The silicon-carbon negative electrode material for a lithium ion battery according to claim 1, wherein the negative electrode material has a specific surface area of 1-20 m²/g, preferably 2-10 m²/g; the negative electrode material has a median particle diameter D50 of 1-30 µm, preferably 3-20 µm; the moisture content of the negative electrode material is 0.01-1wt%, preferably 0.05-0.5wt%; and the negative electrode material has a tap density of 0.3-1.4 g/cm³, preferably 0.5-1.0 g/cm³.

5. A method for preparing the silicon-carbon negative electrode material for a lithium ion battery according to any one of claims 1 to 4, comprising the following steps:
(1) preparation of nano-silicon slurry: adding a silicon powder raw material and a grinding aid into an organic solvent, uniformly mixing, and then introducing the mixture into a grinding device for grinding for 30-60 h to obtain the nano-silicon slurry;
(2) atomization and drying: atomizing and drying the nano-silicon slurry in step (1) by a spray dryer to obtain dry nano-silicon powder;
(3) mechanical shaping: mechanically shaping the dry nano-silicon powder in step (2) to obtain nano-silicon particles with concentrated particle size distribution and regular morphology; and
(4) covering by a gas-phase carbon source: placing the nano-silicon particles in step (3) in a vapor deposition furnace, introducing a protective gas, then introducing a carbon source gas, and heating to deposit the gas-phase carbon source to cover the nano-silicon particles, so as to obtain the silicon-carbon negative electrode material.

6. The preparation method according to claim 5, wherein the silicon powder raw material in step (1) is polysilicon, and the silicon powder raw material has purity greater than 99.9% and a median particle diameter of 1-100 µm, preferably 3-20 µm;
the grinding aid is one or more selected from the group consisting of aluminum chloride, polymeric alkylol amine, triethanolamine, triisopropanolamine, sodium pyrophosphate, sodium tripolyphosphate, sodium acrylate, sodium octadecanoate, sodium polyacrylate, sodium methylene bis-naphthalene sulfonate, potassium citrate, lead naphthenate, tris(2-ethylhexyl) phosphate, sodium dodecyl sulfate, methyl amyl alcohol, cellulose derivatives or guar gum;
the organic solvent is one or more selected from the group consisting of methanol, toluene, benzyl alcohol, ethanol, ethylene glycol, chlorinated ethanol, propanol, isopropanol, propylene glycol, butanol, n-butanol, isobutanol, pentanol, neopentyl alcohol, octanol, acetone or cyclohexanone;
a mass ratio of the silicon powder raw material to a dispersant is 100:(1-20), preferably 100:(5-15); and after the solvent is added, the solid content of a mixed solution is 10%-40%, preferably 20%-30%;
the wet grinding device is a sand mill, a stirring shaft of the sand mill is one of a disc type, a rod type or a rod disc type in structural shape, and the sand mill has a maximum linear speed greater than 14 m/s; and
a material of ball mill beads is selected from the group consisting of ceramics, zirconia, alumina or cemented carbide, and a mass ratio of the ball mill beads to micron silicon powder is (10-30): 1.

7. The preparation method according to claim 5, wherein the spray dryer in step (2) is a closed spray dryer, with a hot air inlet temperature of 150-300°C, preferably 160-280°C, and an outlet temperature of 80-140°C, preferably 90-130°C; and
an atomizing disc in the spray dryer has a rotating speed greater than 10000 rpm.

8. The preparation method according to claim 5, wherein the mechanical shaping in step (3) comprises pulverizing, grading, and sieving, comprising the following specific process steps:
treating the dry nano-silicon powder obtained in step (2) by a pulverizer, adjusting strength of a main machine to 30-50 Hz, adjusting grading strength to 30-50 Hz, so that the particle size of the dry nano-silicon powder is reduced, removing fine powder by grading, and sieving the powder to remove large particles, wherein a sieve has 100-400 meshes, so that the dry nano-silicon powder with concentrated particle size distribution and regular morphology is obtained.

9. The preparation method according to claim 5, wherein in step (4), the deposition process of the gas-phase carbon source has a heating rate of 1-3°C/min and a carbon deposition temperature of 600-900°C, the organic carbon source gas has a flow rate of 1-5 L/min, and reaction duration is 1-4 h;
the organic carbon source gas is one or a combination of two or more selected from the group consisting of methane, ethane, ethylene, acetylene, propane, propylene, acetone, butane, butene, pentane, hexane, benzene, toluene, xylene, styrene, naphthalene, phenol, furan, pyridine, anthracene, and liquefied gas; and
the protective gas is one selected from the group consisting of nitrogen, helium, neon, and argon.

10. A lithium ion battery, wherein a negative electrode material of the lithium ion battery is the silicon-carbon negative electrode material for a lithium ion battery according to any one of claims 1 to 4.
